Europäisches Patentamt

European Patent Office

Office européen des brevets

(19)

(11) Veröffentlichungsnummer: **0 003 812**
**B1**

(12) # EUROPÄISCHE PATENTSCHRIFT

(45) Veröffentlichungstag der Patentschrift:
24.03.82

(51) Int. Cl.³: **C 08 L 23/02**, C 08 L 23/16

(21) Anmeldenummer: **79100463.3**

(22) Anmeldetag: **16.02.79**

(54) **Thermoelastische Mischung aus Polyolefinen mit teilvernetzten Ethylen-Propylen-Copolymerisaten.**

(30) Priorität: **01.03.78 DE 2808709**

(43) Veröffentlichungstag der Anmeldung:
**05.09.79 Patentblatt 79/18**

(45) Bekanntmachung des Hinweises auf die Patenterteilung:
**24.03.82 Patentblatt 82/12**

(84) Benannte Vertragsstaaten:
**BE DE FR GB IT NL SE**

(56) Entgegenhaltungen:
**DE-A-2 202 738**
**DE-A-2 340 202**
**DE-A-2 640 850**

(73) Patentinhaber: **BAYER AG, Zentralbereich Patente, Marken und Lizenzen, D-5090 Leverkusen 1, Bayerwerk (DE)**

(72) Erfinder: **Grigo, Ulrich, Dr., Steinstrasse 161, D-4150 Krefeld 1 (DE)**
Erfinder: **Merten, Josef, Dr., An der Blankstrasse 33a, D-4052 Korschenbroich 1 (DE)**
Erfinder: **Binsack, Rudolf, Dr., Bethelstrasse 4a, D-4150 Krefeld 1 (DE)**
Erfinder: **Fischer, Winfried, Dr., An der Joch 36, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Thermoelastische Mischung aus Polyolefinen mit teilvernetzten Ethylen-Propylen-Copolymerisaten

Gegenstand der Erfindung ist eine Mischung aus bestimmten teilvernetzten Äthylen-Propylen-(EMP) bzw. Äthylen-Propylen-Dien-Kautschuken (EPDM) und Polyolefinen.

Mischungen von Polypropylen mit kautschukartigen Äthylen-Propylen (EMP)- bzw. Äthylen-Propylen-Dien (EPDM)-Polymerisaten sind bereits bekannt.

In der DE-AS 2 340 202, DE-OS 2 640 850 und DE-OS 2 644 644 werden binäre Mischungen von Polypropylen mit unvernetztem EPM bzw. EPDM beschrieben.

Binäre Mischungen aus Polypropylen und vernetztem EPM- bzw. EPDM-Kautschuk werden in folgenden Schutzrechten erwähnt: Die DE-AS 1 272 980 und DE-AS 1 569 305 beschreiben Mischungen aus Polypropylen und EPDM, die in Gegenwart bekannter Vulkanisationsmittel vernetzt werden. Die DE-AS 1 150 200 offenbart eine Mischung aus Polypropylen, einem vulkanisierbaren Kautschuk und peroxidfreien Vulkanisiermitteln. Die DE-OS 1 920 692 erwähnt eine Mischung aus Polypropylen und EPDM-Kautschuk, die mit organischen Peroxiden in Gegenwart eines Beschleunigers vernetzt wird. Angaben über den Vernetzungsgrad bzw. Gelanteil des eingesetzten Kautschuks sind in diesen Literaturstellen nicht vorhanden.

Genauere Angaben über den Gelanteil der eingesetzten EP(D)M-Kautschuke werden in der DE-AS 2 202 706 gemacht, die eine Mischung aus 50–90 Gew.-Teilen EPM- bzw. EPDM-Kautschuk und 10–50 Gew.-Teilen Polypropylen beschreibt. Diese Mischung wird bei erhöhter Temperatur und bei gleichzeitiger Mastizierung und Einwirkung von Vulkanisationsmitteln vernetzt. Der Gelanteil der Mischung beträgt 60–93%, bestimmt durch 48stündiges Eintauchen der Proben in Cyclohexan bei 22,8 °C.

Die DE-AS 2 202 738 beschreibt weiterhin eine Mischung aus 10–90 Gew.-Teilen EPM bzw. EPDM und 10–90 Gew.-Teilen Polypropylen, in der das EPM bzw. EPDM vor der Abmischung mit Polypropylen teilvernetzt wurde. Der Gelanteil, der nach der gleichen Methode wie in DE-AS 2 202 706 bestimmt wurde, beträgt 30–90 Gew.-%, bezogen auf das EPM bzw. EPDM.

Die Vernetzung oder Vulkanisation von Kautschuken in Gegenwart von Polypropylen führt in Abhängigkeit vom Vulkanisationsmittel und den Vulkanisationsbedingungen zu einem mehr oder weniger starken Abbau des Polypropylens (DE-OS 1 920 692), wodurch unerwünschte Eigenschaftsveränderungen der Mischung bewirkt werden können. Um diese Nachteile zu vermeiden, sollte die Vulkanisation des Kautschuks vor dem Abmischen mit Polypropylen erfolgen.

Die DE-AS 2 202 738 beschreibt jedoch, dass zur Erzielung der gewünschten Eigenschaften Gelanteile von 30–90 Gew.-% im teilvernetzten Kautschuk notwendig sind. Bedingt durch den relativ hohen Gelgehalt nehmen die elastischen Eigenschaften der Abmischungen wie Kältekerbschlagzähigkeit drastisch ab. Weiterhin weisen sie rauhe Oberflächen und schlechtes Fliessverhalten auf.

Die erwähnten Nachteile können durch Verwendung von vorvernetzten EPM- bzw. EPDM-Kautschuken mit Gelgehalten von 10–25 Gew.-% weitgehend unterdrückt werden.

So werden die elastischen Eigenschaften wie bleibende Dehnung und Kerbschlagzähigkeit (–20 °C) in Mischungen aus Polypropylen und Sequenz-EPM bzw. -EPDM durch eine Teilvernetzung der Kautschukkomponente bei Gelgehalten von 10–25% gegenüber Vergleichsmischungen mit unvernetztem Sequenz-EPM bzw. -EPDM stark verbessert, während die Wärmeformbeständigkeit nicht oder nur wenig abnimmt. Noch ausgeprägter sind die Verbesserungen der elastischen Eigenschaften bei Mischungen aus Polypropylen und teilvernetztem statistischen EPM bzw. EPDM, in denen der Gelgehalt des EPM bzw. EPDM 10–25 Gew.-% beträgt. Die Wärmeformbeständigkeit der Mischungen nimmt durch die Teilvernetzung des EPM bzw. EPDM hier nicht oder nur geringfügig ab.

Es wurde weiterhin gefunden, dass optimale elastische Eigenschaften, speziell der Kältekerbschlagzähigkeit $a_K$ bei –20 °C, in der Mischung Polypropylen/teilvernetztes EPDM im Vergleich zur unvernetzten Mischung nur erreicht werden, wenn das teilvernetzte EPM bzw. EPDM einen Gelgehalt von 10–25 Gew.-% besitzt. Höhere Gelgehalte wie etwa 30 Gew.-% im EPM bzw. EPDM bewirken ein Absinken der Kältekerbschlagzähigkeit (–20 °C) gegenüber der Mischung aus unvernetztem EPM bzw. EPDM.

Gegenstand der Erfindung ist eine elastomere thermoplastische Mischung enthaltend
a) 10–70 Gew.-% eines durch Anwendung von Vulkanisationsmitteln teilvernetzten Ethylen-Propylen (EPM)- bzw. Ethylen-Propylen-Dien-Kautschuks (EPDM), und
b) 30–90 Gew.-% Polyolefin,
die dadurch gekennzeichnet ist, dass die Komponente a) einen Gelgehalt von 10–25 Gew.-%, bestimmt durch 24stündiges Rühren oder Schütteln in Cyclohexan bei 20 °C, besitzt.

Die Vorvernetzung des EPM bzw. EPDM erfolgt in Masse (z. B. Walzwerken, Knetern, Extrudern). Um optimale Verbesserungen der elastischen Eigenschaften – speziell der bleibenden Dehnung und Kältekerbschlagzähigkeit (–20 °C) in Abmischungen mit Polypropylen zu erhalten, ist es wegen der beschriebenen Nachteile wichtig, einen Gelgehalt von 25 Gew.-% einschliesslich im EPM bzw. EPDM nicht zu überschreiten.

Die Gelgehalte der teilvernetzten EPM- bzw. EPDM-Kautschuke werden durch 24stündiges Rühren oder Schütteln der zerkleinerten Kautschukprobe in Cyclohexan bei 20 °C ermittelt. Um zu gewährleisten, dass die löslichen Anteile in der vorgegebenen Zeit (24 Stunden) völlig aus dem teilvernetzten Kautschuk herausgelöst werden, ist es zweckmässig, die Kautschukpartikel, die einen Durchmesser von weniger als 3 mm besitzen sollten, kräftig zu rühren oder zu schütteln. Nach 24 Stunden werden die gelösten Anteile von den Gelanteilen durch Zentrifugieren abgetrennt; der Überstand wird dekantiert und der unlösliche Rückstand gravimetrisch bestimmt. Anstelle von Cyclohexan kann auch Toluol verwendet werden. Die Gelanteile liegen in der gleichen Grössenordnung. Um den Löseprozess zu verkürzen, kann die Gelbestimmung auch in siedendem Cyclohexan, Toluol oder Chlorbenzol durchgeführt werden (Siedezeit: $^1/_2$–1 Stunde). Die nach dieser Methode gefundenen Werte liegen geringfügig unter den bei Raumtemperatur bestimmten. Alle diese Verfahren sind dem Fachmann bekannt.

Die in den erfindungsgemässen Mischungen verwendeten Kautschuke stellen Mischpolymerisate aus Äthylen und Propylen dar, die nach bekannten Verfahren in Lösung oder Suspension hergestellt werden. Das Gewichtsverhältnis von Äthylen zu Propylen beträgt allgemein 40:60 bis 90:10, bevorzugt 40:60 bis 65:35. Bei Äthylengehalten über 65 Gew.-% entstehen aufgrund von längeren Äthylensequenzen kristalline Bereiche im EPM- bzw. EPDM-Kautschuk. Diese sogenannten Sequenz-EPM oder -EPDM besitzen Schmelzwärmen zwischen 2–18 cal/g, vorzugsweise 7–16 cal/g und Schmelztemperaturen von 40–60 °C. Die sogenannten statistischen EPM bzw. EPDM, die keine kristallinen Bereiche aufweisen, besitzen Schmelzwärmen von 0–2 cal/g, bevorzugt unter 1 cal/g.

Die Mooney-Viskositäten ($ML_{1+4}/100°C$) der unvernetzten EPM- bzw. EPDM-Kautschuke liegen zwischen 25–100, vorzugsweise zwischen 35–90. Die Gelgehalte der unvernetzten EPM- bzw. EPDM-Kautschuke liegen unter 1 Gew.-%.

Die verwendeten Äthylen-Propylen-Copolymerisate (EPM) besitzen praktisch keine Doppelbindungen, während die Äthylen-Propylen-Dien-Terpolymerisate (EPDM) 1–20 Doppelbindungen/1000 C-Atome aufweisen können. Als geeignete Dien-monomere im EPDM seien beispielsweise genannt: konjugierte Diene, z.B. Isopren und Butadien, und nichtkonjugierte Diene mit 5–25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkenylnorbornene, z.B. 5-Äthyliden-2-norbornen, 5-Butyliden-2-norbornen, 2-Methallyl-5-norbornen, 2-Isopropenyl-5-norbornen und Tricyclodiene, z.B. 3-Methyl-tricyclo-(5,2,1,0$^{2,6}$)-3,8-decadien. Bevorzugt seien die nichtkonjugierten Diene Äthyliden-norbornen oder Dicyclopentadien angeführt. Der Diengehalt im EPDM beträgt bevorzugt 0,5–10 Gew.-%.

Die erfindungsgemäss verwendeten Polyolefine können Homopolymerisate wie Polyäthylen und Polypropylen oder Polypropylen-α-Olefin-Copolymerisate mit einem α-Olefin-Gehalt bis zu 30 Gew.-% sein. Als α-Olefine in den Copolymerisaten werden Buten-1, Isobuten, Penten-1 und Hexen-1 verwendet. Bevorzugt als Polyolefin wird Polypropylen, wobei sich als besonders geeignet Polypropylen mit einem Schmelzindex (IMI) von 2–15 g/10 Min., bestimmt bei einer Temperatur von 230 °C, mit einer Belastung von 5 kg, und einem isotaktischen Anteil von mehr als 90 Gew.-% erwiesen hat.

Die partielle Vulkanisation der EPM- bzw. EPDM-Kautschuke kann mit jedem üblichen Vulkanisationsmittel erfolgen, wie z.B. freie Radikale erzeugende Mittel oder Vernetzungsmittel wie Peroxide, die aromatischer oder aliphatischer Natur sein können, z.B. aromatische Diacylperoxide und aliphatische Diacylperoxide, Peroxide von zweibasischen Säuren, Ketenperoxide, Alkyl-.peroxyester, Alkylhydroperoxide, wie Diacetylperoxid, Dibenzoylperoxid, Bis-2,4,dichlorbenzoylperoxid, Di-tert.-butylperoxid, Dicumylperoxid, tert.-Butylperbenzoate, tert.-Butylcumylperoxid, 2,5-Bis-(tert.-butylperoxy)-2,5-dimethylcyclohexan, 1,3-Bis-(tert.-butylperoxy-isopropyl)-benzol, Laurylperoxid, Bernsteinsäureperoxid, Cyclohexanonperoxid, tert.-Butylperoctoat und Butylhydroperoxide.

Die als Vernetzungsmittel eingesetzten Peroxide haben bevorzugt eine Halbwertzeit bei 140°C von mindestens 10 Min.

Brauchbar sind auch Vulkanisationsmittel vom Typ der Azide wie Azidformiate und aromatische Polyazide. Weitere Vulkanisationsmittel sind Thiuramdisulfide, z.B. N,N'-Diäthyl-, Tetrabutyl-, N,N'-Diisopropyl-, Tetramethyl-, N,N'-Dicyclohexyl- und N,N'-Tetralaurylthiuram-disulfid, ferner p-Chinondioxim und Schwefel selbst.

Das Vulkanisationsmittel vom Peroxid-Typ kann entweder für sich allein oder in Gemeinschaft mit den üblichen Hilfsstoffen, wie Schwefel, Maleimiden einschliesslich Bis-maleimiden mit mehrfach ungesättigten Verbindungen (z.B. Cyanurat), Acrylsäureestern, z.B. Trimethylolpropan-trimethacrylat u.dgl. verwendet werden. Wendet man Schwefel oder schwefelabgebende Mittel an, ist es empfehlenswert, einen Beschleuniger für die Schwefelvulkanisation und einen Aktivator, z.B. ein Metallsalz oder -oxid mitzuverwenden, wie es im praktischen Betrieb üblicherweise erfolgt. Gewünschtenfalls können auch Vulkanisationssysteme aus Gemischen von Vulkanisationsmitteln vom Peroxidtyp oder aus Gemischen von Vulkanisationsmitteln vom Schwefeltyp verwendet werden, beispielsweise Dicumylperoxid plus 2,5-bis-(tert.-butylperoxy)-2,5-dimethylhexan oder Schwefel plus Tetramethylthiuramdisulfid. Die bevorzugt in Frage kommenden Mischpolymerisate, die eine restliche Ungesättigtheit aufweisen, welche durch das Vorhandensein eines Polyens verliehen wird, z.B. EPDM, gestatten die breiteste Auswahl von Vulkanisationsmitteln. Bezüglich einer ausführlichen Beschreibung von Vulkanisationsmitteln sei auf das Werk von W. Hofmann, «Vulcanization and Vulcanizing Agents» Palmerton Publishing Co., New York, 1967, verwiesen.

Die partielle Vulkanisation der EPM- bzw. EPDM-Kautschuke kann in Masse (Walzwerk, Innenmischer, Extruder), in Suspension oder in Lösung erfolgen. Die Vulkanisationsbedingungen (Kautschukart, Vulkanisationsmenge und -art, Vulkanisationsdauer und -temperatur) müssen den jeweiligen Verfahren angepasst werden, und zwar so, dass der Gelanteil im EPM bzw. EPDM 25 Gew.-%, nicht übersteigt. Die optimalen Werte für die obengenannten Parameter werden durch Vorversuche ermittelt. Der Vernetzungsgrad wird zweckmässig durch Bestimmung des Gelgehaltes in Cyclohexan ermittelt. Bei einer peroxidischen Vernetzung beträgt beispielsweise die Knetzeit im allgemeinen 3–10 Min., während sich die Temperaturen zwischen 90 und 230°C bewegen können.

Bei der Vernetzung in Masse ist es wichtig, das Vernetzungsmittel vor der eigentlichen Vernetzungsreaktion möglichst homogen zu verteilen, um beim nachfolgenden Vernetzungsprozess lokale Übervernetzungen zu vermeiden. Die Vorvernetzung in Masse wird beispielsweise durch 5- bis 10minütiges Kneten oder Walzen des EPM- bzw. EPDM-Kautschuks bei Temperaturen zwischen 80 und 240°C erreicht. Bei Verwendung von peroxidischen Vernetzungsmitteln richten sich Temperatur und Knetdauer weitgehend nach der Halbwertzeit des Peroxids, bei Verwendung von schwefelhaltigen Vernetzungsmitteln vor allem nach Art und Menge des Beschleunigers.

Das partiell vulkanisierte Mischpolymerisat stellt ein thermoplastisch verarbeitbares Material dar, das unter Bildung eines kontinuierlichen Felles oder Bandes auf einem Walzwerk zusammenwächst. Dieses Fell kann gegebenenfalls zerschnitten und granuliert werden.

Das Vermischen des vorbehandelten partiell vernetzten EPM-oder EPDM-Kautschuks mit dem Polyolefin kann in jeder zweckentsprechenden konventionellen Weise, z.B. auf einem Walzwerk, in einem Innenmischer oder in einem Extruder erfolgen. Die Mischungstemperatur soll hoch genug sein, um den Kunststoff zu erweichen und ein gleichmässiges Gemisch zu bilden. Sie betragen bei einer Verarbeitung im Kneter bzw. Extruder im allgemeinen 170 bis 270°C. Dem Gemisch können gewünschtenfalls Pigmente, Füllstoffe, Stabilisierungsmittel, Gleitmittel, Lichtschutzmittel oder andere geeignete oder modifizierende Ingredenzien einverleibt werden. Die erfindungsgemässen Gemische stellen eine bemerkenswerte Kombination von Verarbeitbarkeit (einschliesslich der Fähigkeit, wiederholt verarbeitet werden zu können) mit guten physikalischen, vor allem elastischen Eigenschaften dar. Die erfindungsgemässen Mischungen zeigen gegenüber entsprechenden mit unvernetztem EPM- bzw. EPDM-Kautschuk eine ausgeprägte Verbesserung der elastischen Eigenschaften, wie bleibende Dehnung und Kältekerbschlagzähigkeit $a_K$ bei –20°C. Die erfindungsgemässen Mischungen eröffnen demnach einen Weg, in der Hitze geformte Artikel mit hohen Polyolefinanteilen, d.h. hoher Wärmeformbeständigkeit und ausgezeichneter Kältekerbschlagzähigkeit herzustellen.

Die thermoplastischen Polymergemische gemäss der Erfindung eignen sich beispielsweise zur Herstellung von Autoteilen, wie Stossstangen, Armaturenbrettern, Autoinnenverkleidungen und anderen Formteilen.

Beispiele 1–7 und Vergleichsbeispiele I–III

Als Äthylen-Propylen-Kautschuke wurden 3 Typen verwendet, die sich im Äthylen- und Dien-Gehalt unterscheiden (Tabelle 1). Die Teilvernetzung wurde mit den in Tabelle 2 angegebenen Peroxidmengen auf einem Innenkneter, Typ BR Pomini-Farrel, bei einer Drehzahl von etwa 100 Upm und einem Stempeldruck von 3,5 bar durchgeführt. Die Knetdauer betrug in allen Fällen 7 Min. Die Massetemperaturen bewegten sich zwischen 90 und 230°C. Das Knetprodukt wurde auf einer Walze (Walzentemperatur etwa 100°C) zum Fell ausgewalzt und anschliessend granuliert. Um ein Zusammenfliessen der Granulatteilchen von statistischen EPM- bzw. EPDM-Kautschuken zu vermeiden, empfiehlt es sich, die Kautschuke nach dem Zerkleinern mit etwa 20% Polypropylen-Pulver zu bestäuben.

Die Herstellung der Mischungen aus teilvernetztem EPM bzw. EPDM und Polypropylen erfolgte auf einer Mehrzweckschnecke unter folgenden Bedingungen:

| | |
|---|---|
| Drehzahl | 160 Upm |
| Durchsatz | 8 kg/h |
| Eingestellte Gehäusetemperatur | 230° C |
| Massetemperatur | 250–270° C |

Die Abzugsborste wurde in einer Wasserwanne gekühlt und anschliessend granuliert.

Tabelle 1
Eigenschaften der Ausgangsstoffe

| | Äthylen-Gehalt Gew.-% | Mooney-Viskosität ($ML_{1+4}$ 100° C) | Ter-Komp. | Schmelzwärme $\Delta H$ cal/g | Doppelbindungen pro 1000 C-Atome | IMI 230/5 g/10 min | isotakt. Anteil Gew.-% |
|---|---|---|---|---|---|---|---|
| Sequenz-EPM | 76 | 85 | – | 13 | 0,5 | – | – |
| Sequenz-EPDM | 76 | 85 | EN* | 9 | 8 | – | – |
| Statist.-EPDM | 51 | 42 | EN* | 0 | 14 | – | – |
| Polypropylen | – | – | – | 22 | – | 7 | 96 |

* EN = Äthyliden-Norbornen

Tabelle 2
Versuchsergebnisse

| | Bsp. 1 | Bsp. 2 | Vgl.-B. 3 | Bsp. 4 | Bsp. 5 | Vgl.-B. 6 | Vgl.-B. IV | Vgl.-B. I | Vgl.-B. II | Vgl.-B. III |
|---|---|---|---|---|---|---|---|---|---|---|
| Polypropylen/Tle. | 60 | 60 | 70 | 70 | 70 | 70 | 70 | 60 | 60 | 70 |
| Sequenz-EPM/Tle. | 40 | — | — | — | — | — | — | 40 | — | — |
| Sequenz-EPDM/Tle. | — | 40 | — | — | — | — | — | — | 40 | — |
| Statist.-EPDM/Tle. | — | — | 30 | 30 | 30 | 30 | 30 | — | — | 30 |
| Peroxid I im EPDM/Tle. | 0,05 | 0,05 | 0,025 | 0,05 | 0,06 | 0,08 | 0,1 | — | — | — |
| Gel-% in Cyclohexan[1] | 19 | 24 | 4 | 12 | 19 | 29 | 38 | 0 | 0 | 0 |
| bleib. Dehnung %[2] | 76,7 | 77,2 | 73 | 73 | 74 | — | — | 82,3 | 80,8 | 76 |
| Vicat (VST/A) °C[3] | 116 | 115 | 136 | 135 | 134 | 133 | 131 | 118 | 116 | 137 |
| Kerbschlagzähigkeit[4] $a_K$ −20° C (KJ/m²) | 46,2 | 42,0 | 22,6 | 35 | 34 | 20 | 5,4 | 25,3 | 27,7 | 12,7 |

[1] 24 h bei 20° C
[2] bestimmt beim Zugversuch nach DIN 53 455
[3] DIN 53 460
[4] DIN 53 453

Die Herstellung der Prüfkörper (Nr. 3 nach DIN 53 504) erfolgte auf einer digital-gesteuerten Engel-Spritzgiessmaschine bei einer Schneckendrehzahl von 130 Upm, einem Spritzdruck von 1075 bar und einer Düsentemperatur von 230°C. Zum Teil wurden aus dem Probekörper Nr. 3 jeweils die für die verschiedenen Prüfungen erforderlichen Probekörper mechanisch herausgearbeitet. Wenn nicht anders angegeben, sind die angegebenen Teile Gew.-Teile.

Diskussion der Prüfergebnisse (Tabelle 2)

Wie aus den Beispielen 1 und 2 ersichtlich, ergibt sich bei Verwendung von teilvernetztem Sequenz-EPM bzw. -EPDM bei Gelgehalten unter 25 Gew.-% ein deutlicher Anstieg der Kältekerbschlagzähigkeit $a_K$ bei −20°C gegenüber Abmischungen mit unvernetztem Polypropylen (Vergleichsbeispiele I und II), während die Wärmeformbeständigkeit (Vicat VST/A) nur wenig absinkt. Noch ausgeprägter ist der Anstieg der Kältekerbschlagzähigkeit von Abmischungen aus Polypropylen und teilvernetztem statistischem EPDM (Beispiele 3–6) im Vergleich zur Abmischung mit unvernetztem EPDM (Vergleichsbeispiel III). Bei Gelanteilen im EPM bzw. EPDM von 10–25 Gew.-% erreicht die Kältekerbschlagzähigkeit $a_K$ bei −20°C ein Maximum, während die Wärmeformbeständigkeit geringfügig abnimmt. Bei Gelanteilen über 30 Gew.-% im EPDM fallen Kältekerbschlagzähigkeit und Wärmeformbeständigkeit einer Mischung mit Polypropylen (Vergleichsbeispiel IV) gegenüber der entsprechenden Mischung mit unvernetztem EPDM (Vergleichsbeispiel III) deutlich ab. Die bleibenden Dehnungen der Abmischungen mit teilvernetztem EPDM (Beispiel 3–6) sind deutlich geringer als die von Abmischungen mit unvernetztem EPM bzw. EPDM, was auf eine durch die Teilvernetzung verbesserte Elastizität zurückzuführen ist.

**Patentansprüche**

1. Elastomere thermoplastische Mischung enthaltend
a) 10–70 Gew.-% eines durch Anwendung von Vulkanisationsmitteln teilvernetzten Äthylen-Propylen bzw. Äthylen-Propylen-Dien-Kautschuks und
b) 30–90 Gew.-% Polyolefin,
dadurch gekennzeichnet, dass die Komponente a) einen Gelgehalt von 10–25 Gew.-%, bestimmt durch 24stündiges Rühren oder Schütteln in Cyclohexan bei 20°C, besitzt.

2. Elastomere thermoplastische Mischung nach Anspruch 1, dadurch gekennzeichnet, dass sie als Komponente a) ein Mischpolymerisat aus Äthylen und Propylen mit einem Gewichtsverhältnis von Äthylen zu Propylen von 40:60 bis 90:10 enthält.

3. Elastomere thermoplastische Mischung nach Ansprüchen 1 und 2, dadurch gekennzeichnet, dass sie als Komponente a) ein Terpolymerisat aus Äthylen, Propylen und einer Dien-Komponente enthält.

4. Elastomere thermoplastische Mischung nach Ansprüchen 1 bis 3, dadurch gekennzeichnet, dass das Terpolymerisat einen Diengehalt von 0,5 bis 10 Gew.-% aufweist.

5. Elastomere thermoplastische Mischung nach Ansprüchen 1 bis 4, dadurch gekennzeichnet, dass die Komponente b) Polypropylen darstellt.

6. Elastomere thermoplastische Mischung nach Ansprüchen 1 bis 5, dadurch gekennzeichnet, dass sie als Polyolefin Polypropylen mit einem Schmelzindex (IMI) von 2–15 g/10 Min., bestimmt bei einer Temperatur von 230°C und einer Belastung von 5 kg, und einem isotaktischen Anteil von mehr als 90 Gew.-% enthält.

7. Elastomere thermoplastische Mischung nach Anspruch 1, dadurch gekennzeichnet, dass als Vulkanisationsmittel für die Komponente a) Peroxide eingesetzt werden, deren Halbwertzeit bei 140°C mindestens 10 Min. betragen.

8. Elastomere thermoplastische Mischung nach Ansprüchen 1 und 7, dadurch gekennzeichnet, dass die Teilvernetzung bei 80–240°C durchgeführt wurde.

**Claims**

1. An elastomeric thermoplastic mixture containing
a) 10–70% by weight of an ethylene/propylene or ethylene/propylene/diene rubber partially crosslinked by the use of vulcanising agents and
b) 30–90% by weight of polyolefin,
characterised in that component a) has a gel content of 10–25% by weight, determined by stirring or shaking a sample in cyclohexane at 20°C for 24 hours.

2. An elastomeric thermoplastic mixture according to claim 1, characterised in that it contains as component a) a copolymer of ethylene and propylene in a ratio, by weight, of ethylene to propylene of from 40:60 to 90:10.

3. An elastomeric thermoplastic mixture according to claims 1 and 2, characterised in that it contains as component a) a terpolymer of ethylene, propylene and a diene component.

4. An elastomeric thermoplastic mixture according to claims 1 to 3, characterised in that the terpolymer has a diene content of from 0,5 to 10% by weight.

5. An elastomeric thermoplastic mixture according to claims 1 to 4, characterised in that component b) is polypropylene.

6. An elastomeric thermoplastic mixture according to claims 1 to 5, characterised in that it contains as polyolefin polypropylene having a melt index (IMI) of 2–15 g/10 minutes, as determined at a temperature of 230°C under a load of 5 kg, and an isotactic fraction content of more than 90% by weight.

7. An elastomeric thermoplastic mixture according to claim 1, characterised in that peroxides having a half life period at 140°C of at least 10 minutes are used as vulcanising agents for component a).

8. An elastomeric thermoplastic mixture according to claims 1 an 7, characterised in that partial cross-linking has been carried out at 80–240 °C.

## Revendications

1. Mélange thermoplastique élastomère contenant

a) 10–70% en poids d'un caoutchouc éthylène-propylène ou éthylène-propylène-diène partiellement réticulé par l'emploi d'agents de vulcanisation et

b) 30–90% en poids de polyoléfine,

caractérisé en ce que le composant a) possède une teneur en gel de 10 à 25% en poids, déterminée par agitation ou secouage durant 24 heures dans du cyclohexane à 20 °C.

2. Mélange thermoplastique élastomère selon la revendication 1, caractérisé en ce qu'il contient comme composant a) un copolymère d'éthylène et de propylène ayant un rapport pondéral éthylène/propylène de 40:60 à 90:10.

3. Mélange thermoplastique élastomère selon les revendications 1 et 2, caractérisé en ce qu'il contient comme composant a) un terpolymère d'éthylène, de propylène et d'un composant diène.

4. Mélange thermoplastique élastomère selon les revendications 1 à 3, caractérisé en ce que le terpolymère présente une teneur en diène de 0,5 à 10% en poids.

5. Mélange thermoplastique élastomère selon les revendications 1 à 4, caractérisé en ce que le composant b) est du polypropylène.

6. Mélange thermoplastique élastomère selon les revendications 1 à 5, caractérisé en ce qu'il contient comme polyoléfine du polypropylène ayant un indice de fluidité (IMI) de 2–15 g/10 minutes déterminé à une température de 230 °C et avec une charge de 5 kg et ayant une fraction isotactique supérieure à 90% en poids.

7. Mélange thermoplastique élastomère selon la revendication 1, caractérisé en ce qu'on utilise comme agents de vulcanisation pour le composant a) des peroxydes dont le temps de demi-vie à 140 °C s'élève à au moins 10 minutes.

8. Mélange thermoplastique élastomère selon les revendications 1 et 7, caractérisé en ce que la réticulation partielle est exécutée à 80–240 °C.